# EUROPÄISCHE PATENTSCHRIFT

(11) **EP 3 207 268 B1**
(45) Veröffentlichungstag und Bekanntmachung des Hinweises auf die Patenterteilung: **28.02.2018**
(21) Anmeldenummer: 15777660.0
(22) Anmeldetag: 05.10.2015
(51) Int. Cl.: F16C 33/66, F16C 33/62, F16C 33/64

(54) **ÖLANZIEHENDES LAGER MIT OBERFLÄCHENMODIFIZIERTEM TEIL AUS NICHTROSTENDEM WÄLZLAGERSTAHL**
OLEOPHILIC BEARING WITH SURFACE-MODIFIED PART MADE OF STAINLESS ROLLING BEARING STEEL
PALIER OLÉOPHILE PRÉSENTANT UNE PARTIE À SURFACE MODIFIÉE EN ACIER À ROULEMENT NON OXYDABLE

(30) Priorität: 15.10.2014 DE 102014220872
(43) Veröffentlichungstag der Anmeldung: 23.08.2017
(73) Patentinhaber: Diener, Christof-Herbert, 72202 Nagold (DE); Gebr. Reinfurt GmbH & Co. KG, 97222 Rimpar (DE)
(72) Erfinder: NIEDERMEIER, Herbert, 97490 Poppenhausen (DE); DIENER, Christof, 72202 Nagold (DE)
(74) Vertreter: Kohler Schmid Möbus Patentanwälte
(86) Internationale Anmeldenummer: PCT/EP2015/072931
(87) Internationale Veröffentlichungsnummer: WO 2016/058857

(56) Entgegenhaltungen:
- DE-A1-102008 050 401
- DE-A1-102010 063 393
- JP-A- 2005 326 021
- JP-A- 2012 056 165
- JP-A- 2014 095 437

## Beschreibung

Die Erfindung betrifft ein Lager mit einem Innenring und einem relativ zum Innenring drehbaren Außenring, wobei der Innenring einen Innenringkörper aus nichtrostendem Wälzlagerstahl und der Außenring einen Außenringkörper aus nichtrostendem Wälzlagerstahl aufweist und wobei zwischen dem Innenring und dem Außenring zumindest teilflächig eine Schmierstoffschicht ausgebildet ist.

Die Erfindung betrifft weiterhin ein Verfahren zur Herstellung eines solchen Lagers.

Die Lebensdauer und der Reibungswiderstand eines Lagers, dessen Lagerteile zumindest teilweise mit einer Schmierstoffschicht versehen sind, werden hauptsächlich von der Benetzung der Lagerteile mit der Schmierstoffschicht bestimmt: Sind die Kontaktflächen der Lagerteile nicht mehr mit der Schmierstoffschicht bedeckt, kommt es in Folge von Verschleiß zu erhöhter Reibung der Lagerteile. Insbesondere schnelldrehende, nicht abgedichtete Lager müssen daher in regelmäßigen Wartungsintervallen geschmiert werden. Wird ein solches Wartungsintervall versehentlich vergessen, kann es zum Ausfall des Lagers kommen.

Ein Ansatz, die Wartungsintervalle zu verlängern oder sogar vollständig überflüssig zu machen, besteht darin, die Benetzbarkeit der Lagerteile für die Schmierstoffe mit Hilfe einer Beschichtung der Lagerteile in den Bereichen zu erniedrigen, in denen kein Schmierstoff angelagert werden soll. Ein Wälzlager mit solchen Lagerteilen ist beispielsweise aus der DE 10 2011 088 232 A1 bekannt geworden.

Ein weiteres Lagerbauteil mit einer oleophoben Beschichtung ist aus der DE 10 2011 077 023 A1 bekannt geworden.

Weiterhin offenbart die WO 2007/012472 A1 ein Verfahren zur Plasmabasierten Herstellung von oleophoben bzw. lipophoben Schichten. Die WO 2007/012472 A1 offenbart insbesondere eine Fluor-Kohlenstoff-Polymerschicht, die mittels einer Plasmapolymerisation von Perfluorocycloalkanen hergestellt wird. Die Fluor-Kohlenstoff-Polymerschichten fungieren selbst als Schmierstoffschicht.

Aus der DE 10 2010 063 393 A1 ist ein Wälzlager mit oleophilen Dichtlippen bekannt geworden. Die Dichtlippen sind dabei abschnittsweise hydrophob beschichtet.

Weiterhin offenbart die DE 10 2008 050 401 A1 ein Gleitlager für einen Turbolader. Das Gleitlager weist eine stationäre oleophobe und eine bewegliche oleophile Lagerfläche auf.

Die WO 03/083318 A1 lehrt, ein Lager mit einem ersten Lagerteil und einem zweiten Lagerteil auszubilden. Das erste Lagerteil ist dabei oleophil und benetzend, das zweite Lagerteil oleophob und nicht-benetzend ausgebildet.

Aus der EP 2 014 938 A1 ist ein Metalllager mit zwei relativ zueinander bewegbaren Lagerteilen bekannt geworden. Zwischen den Lagerteilen sind Magnetpartikel vorgesehen.

Die DE 10 2010 012 901 A1 offenbart einen Wälzkörper. Der Wälzkörper weist eine oleophile diamantähnliche Kohlenstoffschicht (DLC-Schicht) auf.

Weitere Wälzkörper mit einer DLC-Beschichtung sind aus der DE 10 2010 012 903 A1, der DE 10 2010 018 891 A1 und der DE 10 2010 019 953 A1 bekannt geworden. Die DLC-Beschichtung ist dabei mittels eines Plasmaverfahrens abgeschieden.

Schließlich offenbart die DE 10 2010 053 325 A1 ein Gleitlager sowie ein Verfahren zur Herstellung des Gleitlagers. Ein Lagerteil des Lagers ist dabei mittels Laserbeschichtung mit einem Zusatzwerkstoff versehen.

Die bekannten Lager sind jedoch entweder mechanisch nur unzureichend belastbar, rosten oder halten im Lager enthaltenen Schmierstoff nur kurze Zeit im Lager.

Die Aufgabe der vorliegenden Erfindung ist es daher, ein Lager bereitzustellen, das gleichzeitig eine gute Schmierstoffadhäsion zwischen den Lagerteilen, hohe Korrosionsbeständigkeit und eine hohe mechanische Belastbarkeit aufweist. Weiterhin ist es die Aufgabe der vorliegenden Erfindung, ein Verfahren zur Herstellung eines solchen Lagers bereitzustellen.

Diese Aufgabe wird erfindungsgemäß durch ein Lager mit den Merkmalen des Patentanspruchs 1 bzw. ein Verfahren mit den Verfahrensschritten des Patentanspruchs 7 gelöst. Die Unteransprüche geben bevorzugte Varianten wieder.

Die erfindungsgemäße Aufgabe wird somit gelöst durch ein Lager mit einem Innenring und einem relativ zum Innenring drehbaren Außenring, wobei der Innenring einen Innenringkörper aus nichtrostendem Wälzlagerstahl und der Außenring einen Außenringkörper aus nichtrostendem Wälzlagerstahl aufweist und wobei zwischen dem Innenring und dem Außenring zumindest teilflächig eine Schmierstoffschicht ausgebildet ist, wobei die Oberfläche des Innenringkörpers und/oder des Außenringkörpers zumindest teilflächig elementareisenfrei ausgebildet und mit einer ölanziehenden Haftvermittlerschicht des Lagers verbunden ist.

Das erfindungsgemäße Lager weist somit zumindest einen Innenring und einen Außenring auf. Der Innenring ist vorzugsweise koaxial zum Außenring angeordnet.

Der Innenring weist einen Innenringkörper aus nichtrostendem Wälzlagerstahl auf. Der Außenring weist einen Außenringkörper aus nichtrostendem Wälzlagerstahl auf. Unter einem nichtrostenden Wälzlagerstahl wird dabei ein martensitischer Edelstahl, d.h. ein durchhärtbarer Stahl, verstanden. Der nichtrostende Wälzlagerstahl liegt insbesondere in Form von X20Cr13, X30Cr13, X30CrMoN15-1, X39Cr13, X46Cr13, X65Cr13, X90CrMoV18, X65CrMo14, X70CrMo15, X45CrMoV15, X17CrNi16-2, X20CrNi17-2 und/oder X105CrMo17 vor.

Der Innenringkörper und/oder der Außenringkörper sind an ihrer Oberfläche zumindest teilweise, insbesondere vollständig, frei von elementarem Eisen ausgebildet. Unter einer elementareisenfreien Oberfläche wird dabei eine Oberfläche verstanden, auf die der Kupfersulfattest nicht anschlägt. Beim Kupfersulfattest wird der Innenringkörper bzw. der Außenringkörper in eine leicht saure Kupfersulfatlösung mit einem pH-Wert nicht kleiner als drei getaucht. Hierdurch laufen folgende Reaktionsschritte ab:

(1) Cu²⁺ + 2e- -> Cu

(2) Fe -> Fe²⁺ + 2e⁻

Beim "Anschlagen" des Kupfersulfattests lagert sich somit Kupfer an der Oberfläche des Innenringkörpers bzw. des Außenringkörpers ab. Bleibt hingegen ein festhaftender Kupferüberzug an dem Innenringkörper bzw. dem Außenringkörper aus, so liegt eine elementareisenfreie bzw. eisenfreie Oberfläche vor.

Vorzugsweise sind der Innenringkörper und/oder der Außenringkörper an ihrer Oberfläche zumindest teilweise, insbesondere vollständig, eisenfrei ausgebildet. Die elementareisenfreie oder eisenfreie Oberfläche des Innenringkörpers und/oder des Außenringkörpers ist/sind mit einer ölanziehenden Haftvermittlerschicht verbunden.

Die erfindungsgemäße Kombination ist überraschenderweise sowohl korrosionsbeständig als auch mechanisch sehr stabil bei gleichzeitiger guter Haftung des Schmierstoffs im Lager. Mit anderen Worten liegt eine ölanziehende Korrosionsschutz-Haftvermittlerschicht vor. Die genannten Eigenschaften sind dabei gegenüber den aus dem Stand der Technik bekannten Lagern signifikant verbessert. Dies ist besonders beachtenswert, da sich die genannten Eigenschaften normalerweise gegenseitig ausschließen, beispielsweise reduziert eine erhöhte Korrosionsbeständigkeit regelmäßig die mechanische Stabilität eines Lagers.

Die elementareisenfreie bzw. eisenfreie Schicht an der Oberfläche des Innenringkörpers bzw. des Außenringkörpers weist eine Dicke von 5nm bis 30nm, vorzugsweise von 10nm bis 20nm, besonders bevorzugt eine Dicke von 10nm bis 15nm auf.

Da der Innenring besonders großen Einfluss auf die Laufeigenschaften eines Lagers ausübt, ist vorzugsweise zumindest die Oberfläche des Innenringkörpers zumindest teilweise, insbesondere vollständig, elementareisenfrei bzw. eisenfrei ausgebildet. Dabei weist der Innenring bevorzugt zumindest teilweise, insbesondere vollständig, die ölanziehende Haftvermittlerschicht auf.

In besonders bevorzugter Ausgestaltung der Erfindung sind die Rille des Innenrings und die Schulter des Innenrings elementareisenfrei bzw. eisenfrei ausgebildet und weisen eine ölanziehende Haftvermittlerschicht auf. Unter der Rille wird dabei die Laufbahn des Innenrings und unter der Schulter der Anlaufbund des Innenrings verstanden. Es hat sich gezeigt, dass Rille und Schulter des Innenrings die Bereiche darstellen, in denen die erfindungsgemäße Oberflächenmodifikation die größten Vorteile mit sich bringt, da bei einer Modifikation dieser Oberflächen weder eine Kugel (in der Rille), noch ein Käfig (an der Schulter) "trocken laufen".

Das Lager kann in Form eines Gleitlagers ausgebildet sein. Vorzugsweise ist jedoch das Lager in Form eines Wälzlagers ausgebildet. Das Wälzlager kann beispielsweise in Form eines Turbopumpenlagers, eines Spindellagers oder eines Durchflussmesserlagers ausgebildet sein.

Bei dem erfindungsgemäßen Wälzlager handelt es sich vorzugsweise um ein Wälzlager zur Lagerung von rotierenden Teilen in zahnärztlichen Turbinenhandstücken. Ein solches Wälzlager verfügt über einen Drehzahlkennwert n x dₘ > 1.000.000mm/min, wobei n der Innenringdrehzahl in min⁻¹ und dₘ dem mittleren Lagerdurchmesser in mm entspricht und sich dₘ aus der durch 2 dividierten Summe aus Außendurchmesser und Bohrungsdurchmesser des Lagers berechnet.

Das Wälzlager ist dabei vorzugsweise in Form eines Rillenkugellagers oder eines Angularkontaktlagers ausgebildet. Ist das Lager in Form eines Rillenkugellagers oder eines Angularkontaktlagers ausgebildet, weist es mehrere Kugeln und einen Käfig zur Führung der Kugeln auf.

Eine Kugel des Lagers kann einen Kugelkörper aufweisen, der zumindest teilflächig elementareisenfrei ausgebildet ist, wobei die Oberfläche der Kugel eine ölanziehende Haftvermittlerschicht aufweist. Vorzugsweise weisen alle Kugeln des Lagers die vorstehenden Merkmale auf, sodass eine besonders gute Haftung der Schmierstoffschicht im Lager gegeben ist.

Die Haftvermittlerschicht weist vorzugsweise eine Silizium-Kohlenstoff-Sauerstoff-Wasserstoff-Verbindung auf, um die Schmierstoffschicht sicher im Lager zu halten. Die Haftvermittlerschicht kann dabei besonders bevorzugt Silan, insbesondere Mercaptosilan, aufweisen. Im Falle von Mercaptosilan wird eine besonders gute ölanziehende Wirkung der Haftvermittlerschicht beobachtet.

Die erfindungsgemäße Haftvermittlerschicht weist bevorzugt einen Dyn-Wert von 30mN/m-60mN/m, vorzugsweise von 40mN/m-50mN/m auf. Die oleophile (lipophile) Haftvermittlerschicht ermöglicht dadurch sowohl eine gute Benetzung des beschichteten Lagerteils durch den Schmierstoff als auch eine hohe mechanische Belastbarkeit des ersten Lagerteils.

Die Haftvermittlerschicht kann einen Bestandteil auf Isocyanatbasis, auf Methylisocyanatbasis, Butylisocyanatbasis, Ethylisocyanatbasis, Phenylisocyanatbasis, Methylacrylatbasis und/oder Epoxydharzbasis aufweisen. Weiterhin kann die Haftvermittlerschicht Acetylaceton, Resorcin, tert-Butylalkohol, Butylritanat, Butylacetat, Zirkonat, Zirkon-Aluminat, Titanat und/oder Propan-2-ol aufweisen.

Die Haftvermittlerschicht ist vorzugsweise derart zusammengesetzt, dass sie einer wiederholten Dampfdrucksterilisation bei 136°C standhält, sodass das Lager in ein medizinisches Gerät eingebaut und zusammen mit dem medizinischen Gerät sterilisiert werden kann.

Die Haftvermittlerschicht kann ein silanmodifiziertes Polymer, Trichloro(dichlormethyl)silan, Trichloro(phenthyl)silan, Isobutyl(trimethoxy)silan, 2-Cyclohexan-1YL(trimethyl)silan, BIS(2-chlorobenzyl)silan, Butyltimethyl(2,3,4,5-Tetrafluorophenyl)silan, (4-Bromobutoxy)(trimethyl)silan, (4-Chlorobenzoyl)(Triphenyl)silan, (4-ethoxyphenyl)(ethynyl)iospropyl(methyl)silan, BIS(3-phenylpropyl)silan, Dicyclohexyl-methyl-silan, Dimethyl(2,3,6, Trichlorophenyl)silan, Dodecyltis(2-Cyclohexylethyl)silan, Ethoxytris(2-Methoxyphenyl)silan, N(2)Amminoethyl-3 Amminopropyltrimethoxysilan, Ethylenebis(Tris(Decyl)Silan), Hexadecyltris(4-Chlorphenyl)silan, Methyltis(2-Methoxyethoxy)silan, Methyltris(Pentafluorphenyl)silan, (4-Methoxy-1-Cyclohexan-1-YL)(Trimethyl)silan, (3-Mercaptopropyl)trimethoxysilan, Octadecyltris(2-Biphenylyl)silan, Octadecyltis(3-chlorphenyl)silan, Phenyl(o-Tolyl)silan, Phenyltris(3-Phenylpropyl)silan, Phenyltris(9-Fluorenyl)silan, (3-Chloropropyl)trimethoxysilan, (3-Aminopropyl)trimethoxysilan, (3-Iodopropyl)trimethoxysilan, Trimethoxy[3-(methylamino)propyl]silan, Trimethoxy(3,3,3)-trifluoropropylsilan, (3-Glycidyloxypropyl)trimethoxysilan, (3-Iodopropyl)trimethoxysilan, Trimethyl[2-(trimrthylsilyl)methyl]-2-Propenyl]silan, Trimethyl(1-Methyl-1,2-Diphenylethyl)silan, Trimethyl(4-(Trimethylsilyl)butoxy)silan, Tetrakis(2-Methoxyphenyl)silan, Tetrakis(3-Phenylpropyl)silan, Tetrakis(4-(Dimethylamino)Phenyl)silan, n-Hexyltrichiorosilan, Chloropropyltriethoxysilan und/oder Aminoethylaminopropylsilan umfassen. Unter Silan werden Si-H enthaltende Zusammensetzungen, insbesondere SiH₄ bzw. SiH₄-enthaltende Zusammensetzungen, verstanden. Die Haftvermittlerschicht kann weiterhin aus einer oder mehrerer der vorgenannten Stoffe hergestellt werden.

Eine besonders ölanziehende Haftvermittlerschicht kann durch eine fluorfreie und DLC (diamond-like-carbon) - freie Haftvermittlerschicht erzielt werden.

Weiter bevorzugt können der Innenring, der Außenring und/oder zumindest eine Kugel an ihrer Oberfläche die funktionelle Gruppe der Alkohole und Phenole aufweisen, die mit der Haftvermittlerschicht verbunden ist. Mit anderen Worten ist die elementareisenfreie Oberfläche bevorzugt über eine OH-Gruppe mit der Haftvermittlerschicht verbunden.

Die Schmierstoffschicht weist vorzugsweise eine Initialschmierung in Form eines Schmierfettes auf. Das Schmierfett kann einen Verdicker, insbesondere einen Polyharnstoff, eine Kalziumkomplexseife oder ein Gemisch aus einem Polyharnstoff und einer Kalziumkomplexseife und ein Grundöl aufweisen. Die Schmierstoffschicht weist alternativ oder zusätzlich dazu vorzugsweise ein Öl auf, das ein synthetisches Kohlenwasserstoff-Öl und/oder ein Esteröl und/oder ein Mineralöl umfasst. Dieses Öl haftet besonders gut in dem Lager.

Die erfindungsgemäße Aufgabe wird weiterhin gelöst durch ein Verfahren zur Herstellung eines zuvor beschriebenen Lagers mit den Verfahrensschritten:
1. Zumindest teilflächiges Entfernen von elementarem Eisen auf der Oberfläche des Innenringkörpers, des Außenringkörpers und/oder des Kugelkörpers;
3. Zumindest teilflächiges Auftragen einer ölanziehenden Haftvermittlerschicht auf den Innenring, den Außenring und/oder die Kugel.

Die Oberflächenmodifikation zur Entfernung von elementarem Eisen im Verfahrensschritt 1 kann durch Besputtern oder Galvanisieren, insbesondere durch Verchromen oder Vernickeln, erfolgen.

Die Oberflächenmodifikation zur Entfernung von elementarem Eisen im Verfahrensschritt 1 erfolgt bevorzugt mit Zitronensäure, Salpetersäure und/oder einer Chromatlösung, insbesondere einer Dichromatlösung. Dabei handelt es sich nicht um ein klassisches Ätzverfahren, d.h. ein Massenverlust ist praktisch nicht messbar. Andernfalls würde sich die Rauigkeit der modifizierten Oberfläche signifikant erhöhen, wodurch die Laufruhe des Lagers vermindert würde. Vielmehr wird selektiv das elementare Eisen chemisch gebunden und/oder - bevorzugt - praktisch vollständig aus der Oberfläche entfernt.

Bevorzugt wird zur Oberflächenmodifikation Salpetersäure (HNO₃) verwendet, das die elementaren Eisenbestandteile in wasserlösliche Nitrate umwandelt. Durch den Einsatz einer Chromatlösung wird weiterhin Eisen zu Eisen III oxidiert. Weiterhin entsteht Stickstoffoxid. Das Eisen geht in Lösung. Auf der Oberfläche verbleibt eine erhöhte Chromkonzentration. Die erhöhte Chromkonzentration oxidiert - vorzugsweise in Reaktion mit Salpetersäure - zu Chromoxid, das eine Schutzschicht ausbildet.

Die Oberflächenmodifikation erfolgt besonders bevorzugt durch Zugabe der zuvor beschriebenen Nasschemie mit einer Temperatur von mehr als 25°C, insbesondere von mehr als 40°C, bevorzugt mit einer Temperatur von mehr als 55°C. Hierdurch wird die Oberflächenmodifikation deutlich schneller durchgeführt und es werden resistentere Oberflächen erzielt.

Zur besseren Anbindung der Haftvermittlerschicht kann in einem zweiten Verfahrensschritt
2. die elementareisenfreie Oberfläche des Innenringkörpers, des Außenringkörpers und/oder des Kugelkörpers mit der funktionellen Gruppe der Alkohole und Phenole beschichtet werden.

Bevorzugt werden die zuvor beschriebenen Oberflächenmodifikationen vor Montage des Lagers, insbesondere vor dem Verfahrensschritt 4, nämlich der Montage des Innenrings in den Außenring, durchgeführt.

Die Haftvermittlerschicht kann im Plasmaverfahren aufgetragen werden. Eine besonders homogene Haftvermittlerschicht kann dabei durch die Plasmapolymerisation von fluorfreien organischen Verbindungen, insbesondere durch die Plasmapolymerisation von Ethin, Aceton, und/oder Acrylat(en), hergestellt werden.

Die Haftvermittlerschicht kann alternativ dazu auch in einem Tauchverfahren aufgetragen werden. Insbesondere kann Silan als Haftvermittlerschicht durch zumindest teilweises Eintauchen eines Lagerteils in eine Lösung aus Silan und Aceton aufgetragen werden. Silan kann weiterhin durch ein Aufdampfverfahren aufgetragen werden.

Alternativ oder zusätzlich zu den beschriebenen Verfahrensschritten kann die Oberfläche zumindest eines Lagerteils vor der Oberflächenmodifikation im Nanometerbereich mechanisch aufgeraut und/oder elektropoliert werden.

Weiterhin kann die Oberfläche des Lagerteils zumindest teilflächig im Plasma gereinigt werden. Die Anbindung der auf die gereinigte Oberfläche aufgetragenen Schicht(en) wird dadurch weiter verbessert.

Die Vorteile der zuvor beschriebenen Lager und Herstellungsverfahren konnten im Lebensdauertest auf einem automatisierten Dentalprüfstand nachgewiesen werden. Es wurden 10 Testturbinen (von zahnärztlichen Turbinenhandstücken) jeweils mit erfindungsgemäßen Wälzlagern, bei denen der Innenring beschichtet wurde und Standard-Wälzlager gemäß dem Stand der Technik verglichen. Alle Wälzlager wurden vor dem Lebensdauerversuch mit synthetischem Kohlenwasserstoff-Öl geölt und im weiteren Verlauf der Versuche nicht nachgeölt, sodass der Einfluss der Ölbenetzbarkeit der Lagerteile auf die Lebensdauer der Wälzlager objektiv bewertet werden konnte. Der Dentalprüfstand simulierte die Belastungen, die durch den Zahnarzt auf ein Bohrwerkzeug des Turbinenhandstücks übertragen werden. Mit zunehmendem Verschleiß an den Lagerteilen stieg das Reibmoment in den Wälzlagern, sodass die geforderte Leerlaufdrehzahl, die sich normalerweise im unbelasteten Zustand einstellt, nicht mehr erreicht wurde. In diesem Fall stoppte der automatisierte Prüfstand das Turbinenhandstück. Der Stopp wurde als Ausfall gewertet, die Laufzeit bis zum Ausfall dokumentiert. Nach Auswertung der Versuche zeigte sich, dass die erfindungsgemäßen Wälzlager im Vergleich zu den Standard-Wälzlagern eine um zumindest 70% längere Lebensdauer aufwiesen.

Die zuvor beschriebenen Verfahrensschritte 1 bis 4 werden bevorzugt in der beschriebenen Reihenfolge durchgeführt.

Weitere Vorteile und Merkmale der Erfindung ergeben sich aus der nachfolgenden detaillierten Beschreibung eines Ausführungsbeispiels der Erfindung, anhand der Figuren der Zeichnung, die erfindungswesentliche Einzelheiten zeigt, sowie aus den Patentansprüchen.

Die in der Zeichnung dargestellten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

Es zeigen:
- Fig. 1: Eine geschnittene Ansicht eines zahnärztlichen Turbinenhandstücks;
- Fig. 2: eine stark schematisierte Detailansicht aus Fig. 1;
- Fig. 3a: eine Rauigkeitsmessung der Laufbahn eines Innenringkörpers vor dem Entfernen von elementarem Eisen; und
- Fig. 3b: eine Rauigkeitsmessung der Laufbahn des Innenringkörpers aus Fig. 3a nach dem Entfernen von elementarem Eisen.

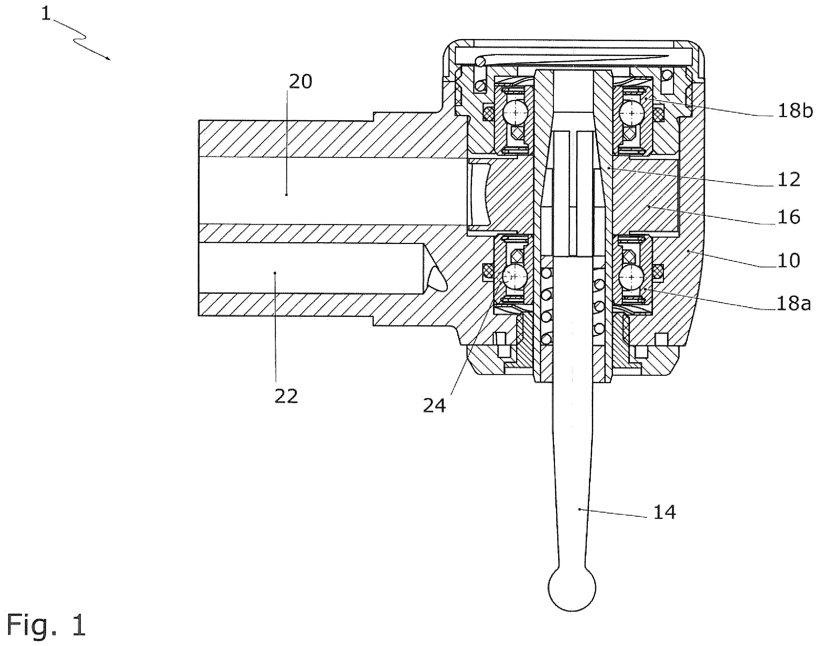

Fig. 1 zeigt ein von Zahnärzten eingesetztes Turbinenhandstück 1 im Querschnitt. Es weist ein Gehäuse 10 auf, in dem eine Rotorwelle 12 angeordnet ist. Auf der Rotorwelle 12, die mit einem Werkzeug 14 verbunden ist, ist ein Rotor 16 angeordnet. Das Werkzeug 14 kann in Form eines Bohrwerkzeugs, eines Schleifwerkzeugs oder dergleichen ausgebildet sein.

Die Rotorwelle 12 wird durch ein erfindungsgemäßes erstes Lager 18a in Form eines Wälzlagers und ein erfindungsgemäßes zweites Lager 18b, das ebenfalls in Form eines Wälzlagers ausgebildet ist, gelagert. Der Antrieb des Rotors 16 erfolgt durch Druckluft, die von einem Zuluftkanal 20 auf den Rotor 16 geleitet wird. Die Abführung der Druckluft erfolgt über einen Abluftkanal 22.

Die Lager 18a, 18b können nicht mit schleifenden Abdeckungen (Dichtscheiben) versehen werden, da diese in den Lagern 18a, 18b zu hohen Reibmomenten führen würden, sodass die von den Dentalkunden geforderten Leerlaufdrehzahlen, die bei bis zu 500.000min⁻¹ liegen, nicht erreicht werden könnten. Bei der Leerlaufdrehzahl handelt es sich um die maximale Drehzahl der Rotorwelle 12, die sich einstellt, wenn keinerlei äußere Belastungen auf das Werkzeug 14 wirken. Während der Zahnbehandlung werden auf das Bohrwerkzeug 14 Axial- und Radialkräfte übertragen, sodass die Drehzahl der Rotorwelle 12 in der Lastphase des Turbinenhandstücks 1 deutlich abnimmt. Die eingesetzten Lager 18a, 18b können deshalb nicht abgedichtet, sondern nur abgedeckt werden.

Eine derartige Deckscheibe hat jedoch bei Wälzlagern gemäß dem Stand der Technik den Nachteil, dass ein Spalt zwischen Innenring und Deckscheibe der Wälzlager besteht, durch den die in den Wälzlagern eingesetzte Schmierstoffschicht nach außen gelangen kann. In Dental-Turbinenlagern wird der Effekt des Schmierstoffaustritts dadurch verstärkt, dass zugeführte Druckluft nicht nur über den Abluftkanal, sondern auch durch die Wälzlager nach außen entweichen kann. Dies führt insgesamt zu einem Abtransport der Schmierstoffschicht und dadurch zu einer Mangelschmierungssituation in den Wälzlagern. Die typische, im Stand der Technik auftretende Folge daraus ist, dass sich die Lagerteile der Wälzlager, insbesondere deren Innenring, Außenring, Kugeln und Käfig, im Misch- bzw. Grenzreibungsbereich bewegen. Dies wiederum führt zu abrasivem Verschleiß an den Lagerteilen der Wälzlager und in Folge dessen zu deren frühzeitigem Ausfall.

Um diesem Problem abzuhelfen, werden die erfindungsgemäßen Lager 18a, 18b mit einer Schmierstoffbeschichtung versehen, die in Wechselwirkung mit funktionalisierten Oberflächen der Lagerteile steht und dadurch nicht oder nur geringfügig von der durch die Lager 18a, 18b strömenden Druckluft mitgerissen wird. Hieraus resultiert eine signifikant höhere Lebensdauer der Lager 18a, 18b, selbst wenn diese nicht oder nur unregelmäßig nachgeschmiert werden.

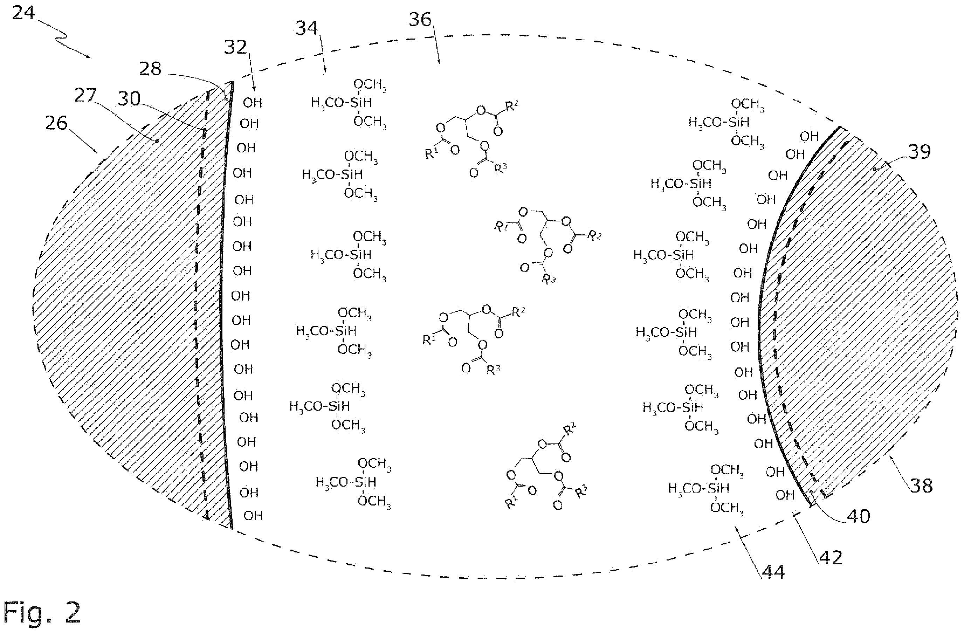

Fig. 2 zeigt einen vergrößerten Ausschnitt 24 aus Fig. 1 in stark schematisierter Darstellung. In dem Ausschnitt 24 ist ein erstes Lagerteil in Form eines Außenrings 26 aus nichtrostendem Wälzlagerstahl dargestellt. Das erste Lagerteil ist lediglich exemplarisch aus Darstellungsgründen in Form eines Außenrings 26 gewählt. In einer weiteren bevorzugten Ausführungsform handelt es sich bei dem ersten Lagerteil um einen Innenring.

Ein Außenringkörper 27 des Außenrings 26 weist eine nasschemisch mit Salpetersäure und Dichromatlösung behandelte Oberfläche 28 auf. Die Behandlungstiefe - in Fig. 2 durch die gestrichelte Linie 30 angedeutet - beträgt nur wenige Nanometer. Auf die behandelte und später gereinigte Oberfläche 28 wurde mittels eines H₂O-Plasmas eine Hydroxylgruppenschicht 32 abgeschieden. Die Hydroxylgruppenschicht 32 dient der Verankerung einer ölanziehenden Haftvermittlerschicht 34. Die Haftvermittlerschicht weist eine Silizium-Kohlenstoff-Sauerstoff-Wasserstoff-Verbindung auf. Die Haftvermittlerschicht 34 bindet eine Schmierstoffschicht 36. Die Schmierstoffschicht 36 wird in Fig. 2 durch Fettmoleküle dargestellt, wobei die Variablen R¹, R² und R³ als Stellvertreter für Alkyl- oder Alkenylreste mit einer meist ungeraden Anzahl von Kohlenstoffatomen dienen. Alternativ oder zusätzlich zu den Fettmolekülen kann die Schmierstoffschicht Moleküle eines Öls aufweisen.

Dem ersten Lagerteil steht ein zweites Lagerteil in Form einer Kugel 38 gegenüber. Das zweite Lagerteil ist dabei lediglich exemplarisch kugelförmig mit kleinem Radius dargestellt. Bei dem zweiten Lagerteil 38 kann es sich auch um einen Innenring handeln. Die Kugel 38 weist einen aus nichtrostendem Wälzlagerstahl ausgebildeten Kugelkörper 39 auf. Der Kugelkörper 39 weist, analog zu dem Außenring 26, eine modifizierte Oberfläche 40, eine Hydroxylgruppenschicht 42 und eine Haftvermittlerschicht 44 auf. Auch die Haftvermittlerschicht 44 bindet die Schmierstoffschicht 36. Hierdurch kann die Schmierstoffschicht 36 sicher zwischen dem ersten Lagerteil in Form eines Außenrings 26 und dem zweiten Lagerteil in Form einer Kugel 38 gehalten werden.

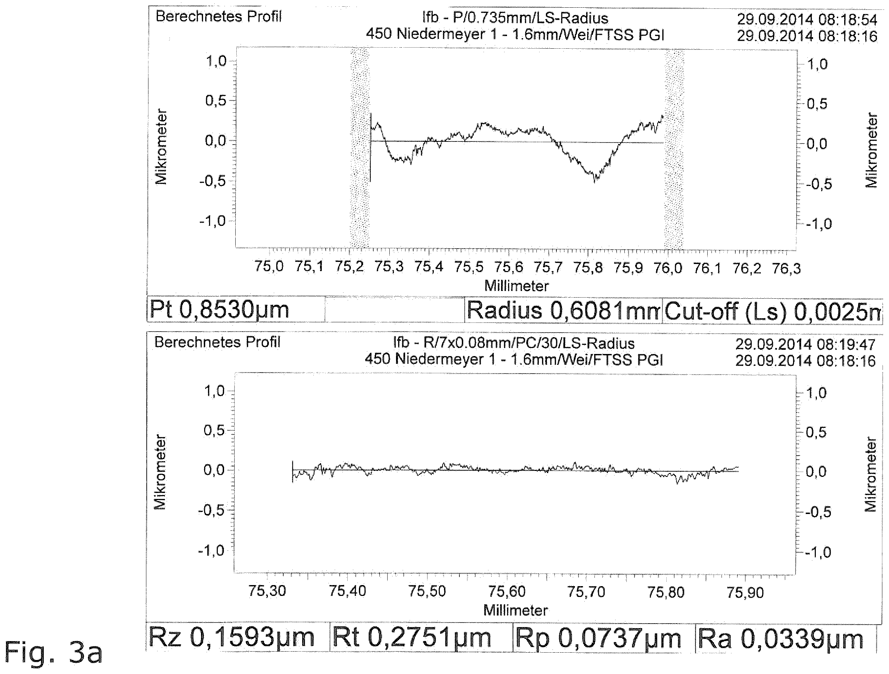

Fig. 3a zeigt eine Rauigkeitsmessung einer Oberfläche der Laufbahn eines Innenringkörpers eines erfindungsgemäßen Lagers vor einer Modifikation mit Salpetersäure und Dichromatlösung. Die Lauffläche des Innenringkörpers weist einen Mittenrauwert von Ra = 0,0339µm auf.

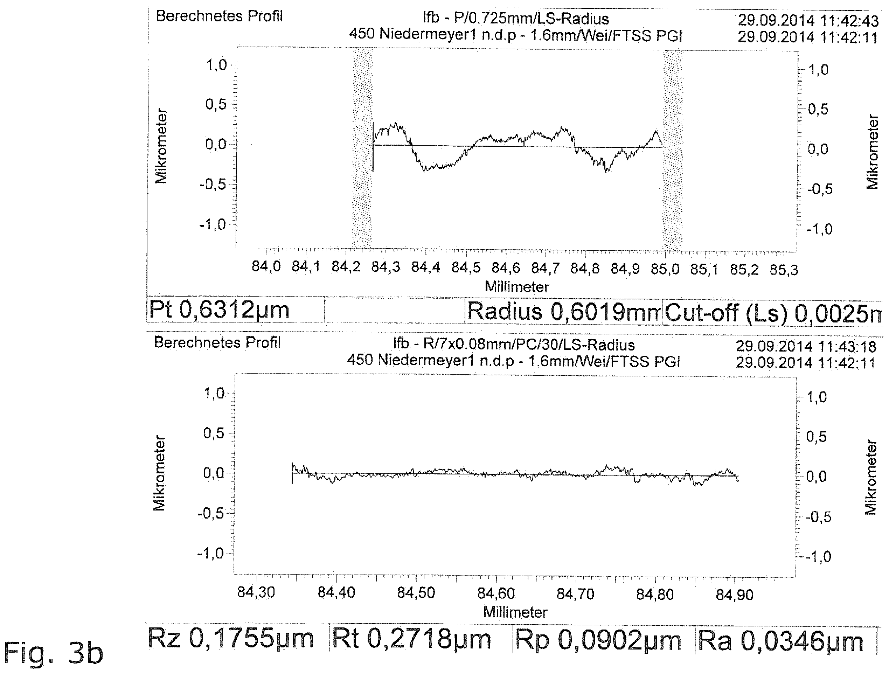

Fig. 3b zeigt eine Rauigkeitsmessung einer Oberfläche der Laufbahn des Innenringkörpers gemäß Fig. 3a nach der Modifikation mit Salpetersäure und Dichromatlösung. Die Lauffläche des Innenringkörpers weist nun einen Mittenrauwert von Ra = 0,0346µm auf. Aus einem Vergleich der beiden Messungen gemäß Fig. 3a und Fig. 3b wird ersichtlich, dass die mittlere Rauigkeit durch die Oberflächenmodifikation nicht signifikant angestiegen ist. Bei der Oberflächenmodifikation handelt es sich somit nicht um ein Ätzverfahren, sondern vielmehr um ein Behandlungsverfahren zur selektiven Entfernung von elementarem Eisen aus der Oberfläche des Lagerteilkörpers.

Zusammenfassend betrifft die Erfindung die Schmierung eines Lagers, insbesondere eines Wälzlagers. Um das Lager unempfindlich gegen fehlende oder unregelmäßige Pflegeschmierungen bei gleichzeitigem Erhalt seiner mechanischen Leistungsfähigkeit zu machen, wird zumindest ein Lagerteil des Lagers zumindest teilweise mit einer ölanziehenden Haftvermittlerschicht versehen. Die Haftvermittlerschicht bindet eine Schmierstoffschicht des Lagers an das mit der Haftvermittlerschicht versehene Lagerteil. Die Haftvermittlerschicht ist dabei an eine elementareisenfreie Oberfläche eines Lagerteilkörpers gebunden. Die Entfernung von freiem Eisen aus der Lagerteilkörperoberfläche erfolgt bevorzugt mit Salpetersäure, Chromatlösung und/oder Zitronensäure. Insgesamt weist das behandelte Lagerteil eine ölanziehende Korrosionsschutz-Haftvermittlerschicht auf. Das erfindungsgemäße Lager zeichnet sich vor allem beim Einsatz in druckbetriebenen Geräten, insbesondere in von Zahnärzten benutzten Turbinenhandstücken, aus, da hier der Verlust der Schmierstoffschicht bei Betrieb des Gerätes bislang besonders hoch war.

## Patentansprüche

1. Lager (18a, 18b) mit einem Innenring und einem relativ zum Innenring drehbaren Außenring (26), wobei der Innenring einen Innenringkörper aus nichtrostendem Wälzlagerstahl und der Außenring (26) einen Außenringkörper (27) aus nichtrostendem Wälzlagerstahl aufweist und wobei zwischen dem Innenring und dem Außenring (26) zumindest teilflächig eine Schmierstoffschicht (36) ausgebildet ist,
**dadurch gekennzeichnet,**
**dass** die Oberfläche (28) des Innenringkörpers und/oder des Außenringkörpers (27) zumindest teilflächig elementareisenfrei ausgebildet und mit einer ölanziehenden Haftvermittlerschicht (34) verbunden ist.

2. Lager nach Anspruch 1, bei dem das Lager (18a, 18b) in Form eines Wälzlagers ausgebildet ist.

3. Lager nach Anspruch 2, bei dem das Lager (18a, 18b) in Form eines Rillenkugellagers oder eines Angularkontaktlagers ausgebildet ist, wobei das Lager (18a, 18b) mehrere Kugeln (38) und einen Käfig zur Führung der Kugeln (38) aufweist.

4. Lager nach Anspruch 3, bei dem zumindest eine Kugel (38) einen Kugelkörper (39) aufweist, der zumindest teilflächig elementareisenfrei ausgebildet ist, wobei die Oberfläche (40) der Kugel (38) eine ölanziehende Haftvermittlerschicht (44) aufweist.

5. Lager nach einem der vorhergehenden Ansprüche, bei dem die Haftvermittlerschicht (34, 44) eine Silizium-Kohlenstoff-Sauerstoff-Wasserstoff-Verbindung aufweist.

6. Lager nach einem der vorhergehenden Ansprüche, bei dem der Innenring, der Außenring (26) und/oder die Kugel (38)an ihrer Oberfläche (28, 40) die funktionelle Gruppe (32, 42) der Alkohole und Phenole aufweist, die mit der Haftvermittlerschicht (34, 44) verbunden ist.

7. Verfahren zur Herstellung eines Lagers (18a, 18b) nach einem der vorhergehenden Ansprüche mit den Verfahrensschritten:
1. Zumindest teilflächiges Entfernen von elementarem Eisen auf der Oberfläche (28, 40) des Innenringkörpers, des Außenringkörpers (27) und/oder des Kugelkörpers (39);
3. Zumindest teilflächiges Auftragen einer ölanziehenden Haftvermittlerschicht (34, 44) auf den Innenring, den Außenring (26) und/oder die Kugel (38).

8. Verfahren nach Anspruch 7, bei dem das elementare Eisen im Verfahrensschritt 1 mit Zitronensäure, Salpetersäure und/oder einer Chromatlösung entfernt wird.

9. Verfahren nach Anspruch 7 oder 8, bei dem in einem zweiten Verfahrensschritt
2. die elementareisenfreie Oberfläche (28, 40) des Innenringkörpers, des Außenringkörpers (27) und/oder des Kugelkörpers (39) mit der funktionellen Gruppe (32, 42) der Alkohole und Phenole beschichtet wird.

10. Verfahren nach einem der Ansprüche 7 bis 9, bei dem in einem Verfahrensschritt
4. der Innenring in den Außenring (26) montiert wird.

## Claims

1. A bearing (18a, 18b) having an inner ring and an outer ring (26) which is rotatable relative to the inner ring, wherein the inner ring has an inner ring body made of stainless rolling bearing steel and the outer ring (26) has an outer ring body (27) made of stainless rolling bearing steel, and wherein a lubricant layer (36) is formed on at least part of the surface between the inner ring and the outer ring (26),
**characterized in that**
at least part of the surface (28) of the inner ring body and/or of the outer ring body (27) is elemental-iron-free and is bonded to an oleophilic adhesion promoter layer (34).

2. The bearing as claimed in claim 1, in which the bearing (18a, 18b) is in the form of a rolling bearing.

3. The bearing as claimed in claim 2, in which the bearing (18a, 18b) is in the form of a deep groove ball bearing or an angular contact bearing, wherein the bearing (18a, 18b) comprises a plurality of balls (38) and a cage for guiding the balls (38).

4. The bearing as claimed in claim 3, in which at least one ball (38) has a ball body (39) at least part of the surface of which is elemental-iron-free, wherein the surface (40) of the ball (38) has an oleophilic adhesion promoter layer (44).

5. The bearing as claimed in any one of the preceding claims, in which the adhesion promoter layer (34, 44) has a silicon-carbon-oxygen-hydrogen bond.

6. The bearing as claimed in any one of the preceding claims, in which the inner ring, the outer ring (26) and/or the ball (38) has on its surface (28, 40) the functional group (32, 42) of the alcohols and phenols which is bonded to the adhesion promoter layer (34, 44).

7. A method for producing a bearing (18a, 18b) as claimed in any one of the preceding claims, comprising the method steps:
1. removing elemental iron from at least part of the surface (28, 40) of the inner ring body, of the outer ring body (27) and/or of the ball body (39) ;
3. applying an oleophilic adhesion promoter layer (34, 44) to at least part of the surface of the inner ring, the outer ring (26) and/or the ball (38).

8. The method as claimed in claim 7, in which the elemental iron is removed in method step 1 with citric acid, nitric acid and/or a chromate solution.

9. The method as claimed in claim 7 or 8, in which in a second method step
2. the elemental-iron-free surface (28, 40) of the inner ring body, of the outer ring body (27) and/or of the ball body (39) is coated with the functional group (32, 42) of the alcohols and phenols.

10. The method as claimed in any one of claims 7 to 9, in which in a method step
4. the inner ring is mounted in the outer ring (26).

## Revendications

1. Palier (18a, 18b) comportant une bague intérieure et une bague extérieure (26) pouvant tourner par rapport à la bague intérieure, la bague intérieure présentant un corps de bague intérieure en acier à roulement inoxydable et la bague extérieure (26) un corps de bague extérieure (27) en acier à roulement inoxydable, et une couche lubrifiante (36) étant réalisée entre la bague intérieure et la bague extérieure (26) au moins sur une partie de la surface,
**caractérisé en ce**
**que** la surface (28) du corps de bague intérieure et/ou du corps de bague extérieure (27) est réalisée exempte de fer élémentaire au moins sur une partie de la surface et liée à une couche de promoteur d'adhérence oléophile (34).

2. Palier selon la revendication 1, dans lequel le palier (18a, 18b) est réalisé sous la forme d'un palier à roulement.

3. Palier selon la revendication 2, dans lequel le palier (18a, 18b) est réalisé sous la forme d'un roulement rainuré à billes ou d'un roulement à contact oblique, le palier (18a, 18b) présentant plusieurs billes (38) et une cage pour guider les billes (38).

4. Palier selon la revendication 3, dans lequel au moins une bille (38) présente un corps de bille (39) qui est réalisé exempt de fer élémentaire au moins sur une partie de sa surface, la surface (40) de la bille (38) présentant une couche de promoteur d'adhérence oléophile (44).

5. Palier selon l'une des revendications précédentes, dans lequel la couche de promoteur d'adhérence (34, 44) présente un composé de silicium, carbone, oxygène et hydrogène.

6. Palier selon l'une des revendications précédentes, dans lequel la bague intérieure, la bague extérieure (26) et/ou la bille (38) présentent à leur surface (28, 40) le groupe fonctionnel (32, 42) des alcools et des phénols qui est lié à la couche de promoteur d'adhérence (34, 44).

7. Procédé de fabrication d'un palier (18a, 18b) selon l'une des revendications précédentes, présentant les étapes suivantes :
1. enlèvement, au moins sur une partie de la surface, du fer élémentaire de la surface (28, 40) du corps de bague intérieure, du corps de bague extérieure (27) et/ou du corps de bille (39) ;
3. application, au moins sur une partie de la surface, d'une couche de promoteur d'adhérence oléophile (34, 44) sur la bague intérieure, la bague extérieure (26) et/ou la bille (38).

8. Procédé selon la revendication 7, dans lequel le fer élémentaire est enlevé à l'étape de procédé 1 à l'aide d'acide citrique, d'acide nitrique et/ou d'une solution de chromate.

9. Procédé selon la revendication 7 ou 8, dans lequel, dans une deuxième étape de procédé
2. la surface (28, 40) exempte de fer élémentaire du corps de bague intérieure, du corps de bague extérieure (27) et/ou du corps de bille (39) est revêtue du groupe fonctionnel (32, 42) des alcools et des phénols.

10. Procédé selon l'une des revendications 7 à 9, dans lequel, dans une étape de procédé
4. la bague intérieure est montée dans la bague extérieure (26).
